# EUROPEAN PATENT SPECIFICATION

(11) **EP 3 493 389 B1**
(45) Date of publication and mention of the grant of the patent: **14.09.2022**
(21) Application number: 17836681.1
(22) Date of filing: 06.07.2017
(51) Int. Cl.: H02M 7/00

(54) **POWER CONVERSION APPARATUS**
STROMUMWANDLUNGSVORRICHTUNG
APPAREIL DE CONVERSION DE PUISSANCE

(30) Priority: 01.08.2016 JP 2016151540
(43) Date of publication of application: 05.06.2019
(73) Proprietor: Hitachi, Ltd., Tokyo 100-8280 (JP)
(72) Inventor: YAMAMOTO, Taku, Tokyo 100-8280 (JP); HASHIGUCHI, Naoya, Tokyo 100-8280 (JP); URUSHIWARA, Noriyoshi, Tokyo 100-8280 (JP); TERAKADO, Shuichi, Tokyo 100-8280 (JP); ISHIKAWA, Katsumi, Tokyo 100-8280 (JP); NAKATA, Kiyoshi, Tokyo 100-8280 (JP)
(74) Representative: Mewburn Ellis LLP
(86) International application number: PCT/JP2017/024876
(87) International publication number: WO 2018/025574

(56) References cited:
- WO-A1-2011/093239
- WO-A1-2013/179433
- WO-A1-2016/103324
- CN-A- 101 404 445
- CN-U- 201 616 760
- JP-A- 2006 280 191
- JP-A- 2007 049 848
- JP-A- 2007 312 566
- JP-U- H0 541 396

## Description

### Technical Field

The present invention relates to a power conversion apparatus using switching modules.

### Background Art

Conventionally, in a power conversion apparatus using switching modules, power is usually transmitted by plural conductors (hereinafter referred to as "bus bars"). Because these bus bars have a large potential difference when the power conversion apparatus is used, bus bars laminated with insulation film (hereinafter referred to as "laminate bus bars") are built into such power conversion apparatus.

Here, in the power conversion apparatus, plural laminate bus bars are installed compactly in a tight space for the purpose of downsizing the apparatus and design taking an insulation distance between the laminate bus bars into consideration is requisite. In practical design, adjoining laminate bus bars, separated from each other sufficiently, are employed or layered laminate bus bars in which plural laminate bus bars are layered with an insulating material in between are employed. Particularly, the layered laminate bus bars in contact with an insulating material filled between them are capable of keeping the distance constant between the laminate bus bars and, therefore, enhance the reliability of assembly. Accordingly, it would be possible to shorten an interlayer distance of layered laminate bus bars and it can be contrived to reduce wiring inductance, downsize the apparatus, make it thinner, and improve ease of assembly (refer to, for example, Patent Literature 1).

### Citation List

### Patent Literature

Patent Literature 1: Japanese Unexamined Patent Application Publication No. 2008-245451

### Summary of Invention

### Technical Problem

In making an attempt to save space by reviewing the arrangement of electrical components such as switching modules and filter capacitors which are mounted in a power conversion apparatus, it has recently been recognized that laminate bus bars having a bent shape rather than flat ones allow for more options of wiring routing and a higher degree of freedom of design and it is desired to use laminate bus bars having a bent shape.

However, a power conversion apparatus introduced in Patent Literature 1 mentioned above has a problem in which bending layered laminate bus bars as an assembly makes insulation film in bent portions stretch, which, in turn, decreases pressure tightness in the bent portions. CN 101 404 445 A discloses a current transformer power module main body apparatus and its processing method. JP 2007 049848 A and JP 2006 280191 A refer to a main circuit structure for power converters. JP H05 41396 U and JP2007312566 A relate to an inverter device. CN201616760U is directed to bent laminated busbars.

The present invention has been developed in consideration of the matter discussed above and an object of the invention is to provide a power conversion apparatus that enables it to ensure pressure tightness in the bent portions of layered laminate bus bars having a bent shape, makes an improvement in terms of downsizing and the degree of freedom of design, and provides for better reliability. Solution to Problem

To achieve this object, the present invention provides a power conversion apparatus according to claim 1. A power conversion apparatus includes filter capacitors which store direct current (DC) power, switching modules which convert DC power stored in the filter capacitors to alternating current (AC) power, and a layered laminate bus bar assembly in which a plurality of laminate bus bars are layered with a given spacing from one another, the filter capacitors and the switching modules being electrically connected by the layered laminate bus bar assembly, wherein the layered laminate bus bar assembly includes a first laminate bus bar and a second laminate bus bar, the first laminate bus bar and the second laminate bus bar respectively include first faces opposing each other, second faces opposing each other, and first bent portions connecting the first faces with the second faces respectively and opposing each other, and a first insulating material is disposed , respectively, between the first face of the first laminate bus bar and the first face of the second laminate bus bar, and between the second face of the first laminate bus bar and the second face of the second laminate bus bar.

### Advantageous Effects of Invention

According to the present invention, it is possible to provide a power conversion apparatus that enables it to ensure pressure tightness in the bent portions of layered laminate bus bars having a bent shape, makes an improvement in terms of downsizing and the degree of freedom of design, and provides for better reliability.

### Brief Description of Drawings

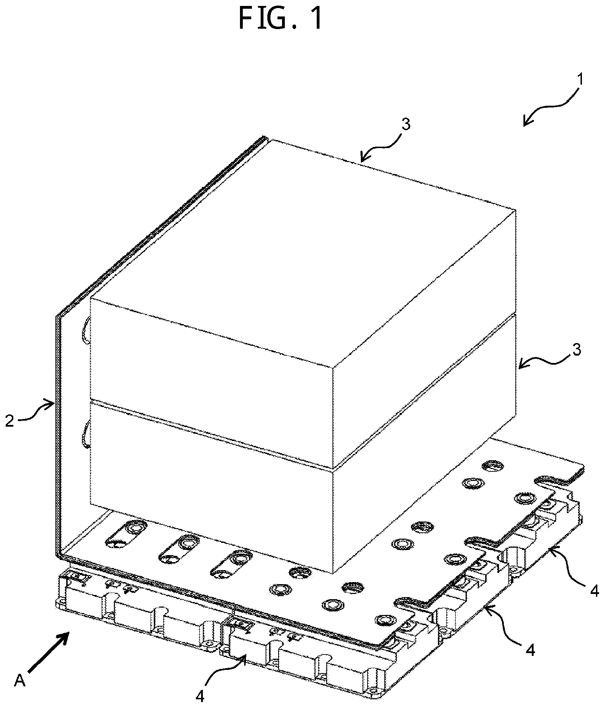

It should be noted that each of the figures 1-6 and 8-10 does not show all insulating material, since according to the independent claim, the invention requires an insulating material to be disposed, respectively, between the first face of the first laminate bus bar and the first face of the second laminate bus bar, and between the second face of the first laminate bus bar and the second face of the second laminate bus bar.
Fig. 1 is a perspective diagram of a power conversion apparatus pertaining to a first embodiment.
Fig. 2 is a side view diagram of the power conversion apparatus depicted in Fig. 1.
Fig. 3 is an exploded perspective diagram depicting parts above switching modules of the power conversion apparatus depicted in Fig. 1.
Fig. 4 is an exploded perspective diagram depicting parts lateral to filter capacitor terminals of the power conversion apparatus depicted in Fig. 1.
Fig. 5 is a side view diagram depicting another configuration of the power conversion apparatus pertaining to the first embodiment.
Fig. 6 is a side view diagram depicting another configuration of the power conversion apparatus pertaining to the first embodiment.
Fig. 7 is a side view diagram depicting a power conversion apparatus pertaining to a second embodiment.
Fig. 8 is a side view diagram depicting a power conversion apparatus pertaining to a third embodiment.
Fig. 9 is a side view diagram depicting another configuration of the power conversion apparatus pertaining to the third embodiment.
Fig. 10 is a side view diagram depicting another configuration of the power conversion apparatus pertaining to the third embodiment. Description of Embodiments

Then, a power conversion apparatus pertaining to each of embodiments is described with reference to the drawings. The embodiments described below are examples given for explaining the present invention,as defined by the appended claims, and are not intended to limit the present invention to these embodiments only.

### First Embodiment

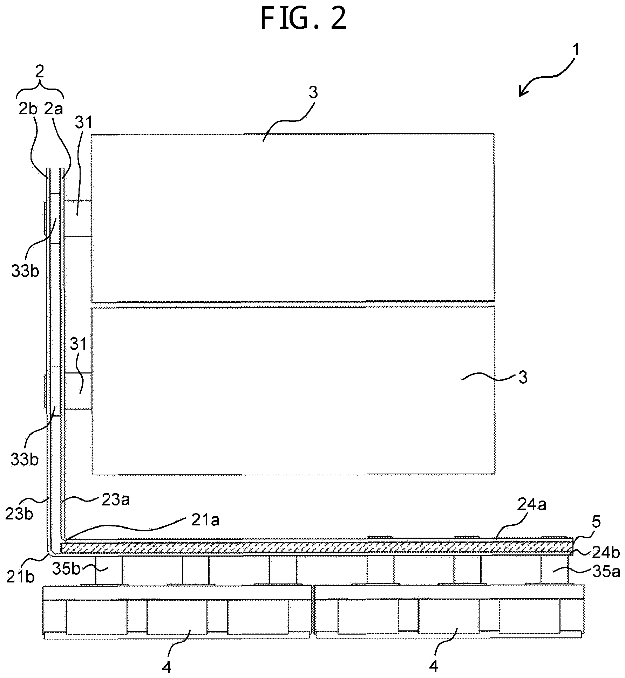

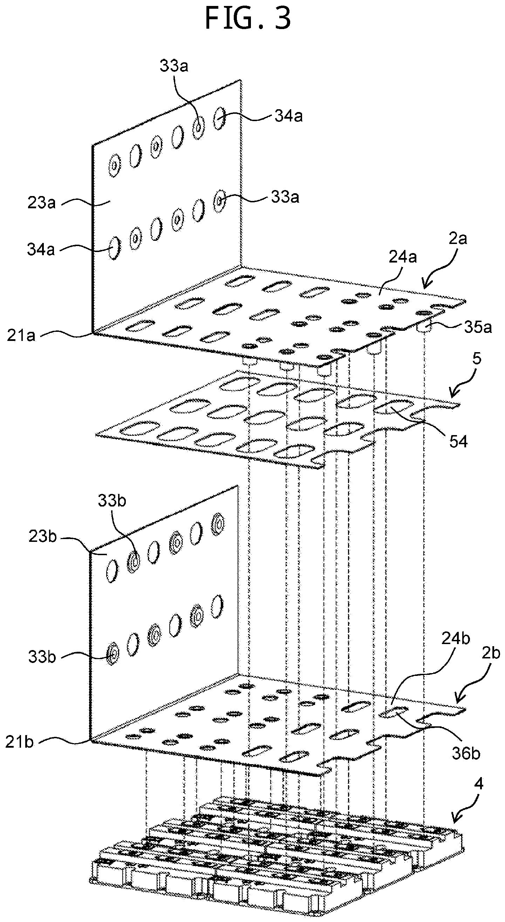

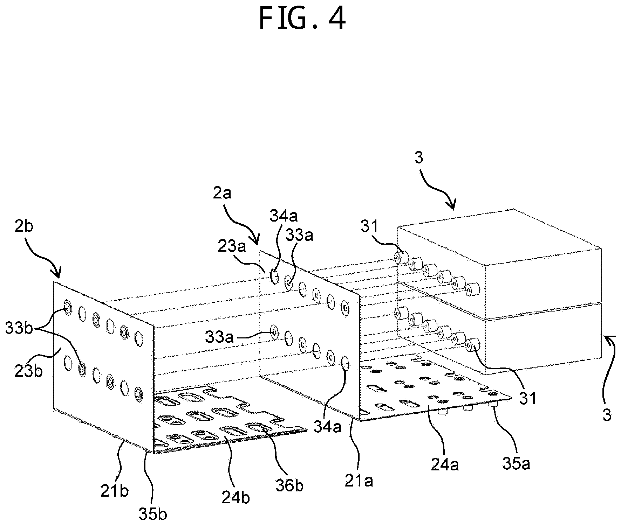

Fig. 1 is a perspective of a power conversion apparatus pertaining to a first embodiment, Fig. 2 is a side view diagram of the power conversion apparatus depicted in Fig. 1, Fig. 3 is an exploded perspective diagram depicting parts above switching modules of the power conversion apparatus depicted in Fig. 1. Fig. 4 is an exploded perspective diagram depicting parts lateral to filter capacitor terminals of the power conversion apparatus depicted in Fig. 1. Now, to prevent complication of the drawings, where plural members that are identical exist in each drawing, a representative subset of them is assigned a reference designator without assigning the designator to all the members that are identical.

As depicted in Figs. 1 to 4, the power conversion apparatus 1 pertaining to the first embodiment is comprised of a laminate bus bar assembly 2, filter capacitors 3 which are electrically connected with the laminate bus bar assembly 2, switching modules 4 which are electrically connected with the laminate bus bar assembly 2, and an insulating material 5.

As depicted in Figs. 2 to 4, the laminate bus bar assembly 2 includes a first laminate bus bar 2a having a substantially letter L shape in a side view (viewing in an arrow A direction marked in Fig. 1) and a second laminate bus bar 2b having a substantially letter L shape, which is the same as the first laminate bus bar 2a, and layered with respect to the first laminate bus bar 2a with both the bus bars being spaced from each other.

As depicted in Fig. 2 to Fig. 4, the first laminate bus bar 2a has an opposing face 23a (corresponding to a first face in the present application) which is positioned opposite to the terminals 31 of the filter capacitors 3 and an opposing face 24a (corresponding to a second face in the present application) which is positioned opposite to the switching modules 4. The opposing face 23a and the opposing face 24a are positioned at a substantially right angle to each other with respect to a folding line which is a bent portion 21a (corresponding to a first bent portion in the present application) and this configuration makes the first laminate bus bar 2a assume the substantially letter L shape mentioned above.

In the opposing face 23a, as depicted in Fig. 3 and Fig. 4, plural insertion holes 34a into which connection protrusions 33b of the second laminate bus bar 2b which will be detailed later are inserted and plural connection portions 33a which electrically connect with the terminals 31 of the filter capacitors 3 are formed, arranged alternately one another. Also, as depicted in Fig. 3 and Fig. 4, in a right area of the opposing face 24a, referred to in Fig. 2, plural connection protrusions 35a are formed which make electrical connections with the switching modules 4, penetrating through holes 36b in the second laminate bus bar 2b, which will be detailed later.

As depicted in Fig. 2 to Fig. 4, the second laminate bus bar 2b has an opposing face 23b (corresponding to a first face in the present application) which is positioned opposite to the opposing face 23a of the first laminate bus bar 2a when it has been layered with respect to the first laminate bus bar 2a and an opposing face 24b (corresponding to a second face in the present application) which is positioned opposite to the opposing face 24a of the first laminate bus bar 2a when it has been layered. The opposing face 23b and the opposing face 24b are positioned at a substantially right angle to each other with respect to a folding line which is a bent portion 21b (corresponding to a first bent portion in the present application) and this configuration makes the laminate bus bar 2b assume the substantially letter L shape mentioned above. Additionally, the second laminate bus bar 2b has such a size that every end face of the opposing face 23b coincides with (flushes with) every end face of the opposing face 23a and every end face of the opposing face 24b coincides with every end face of the opposing face 24b when it has been layered with respect to the first laminate bus bar 2a with a given spacing between them.

In the opposing face 23b, as depicted in Fig. 3 and Fig. 4, plural connection protrusions 33b are formed which are inserted through the insertion holes 34a of the first laminate bus bar 2a and electrically connect with the terminals 31 of the filter capacitors 3. Also, as depicted in Fig. 4, in a left area of the opposing face 24b, referred to in Fig. 2, plural connection protrusions 35a are formed which make electrical connections with the switching modules 4. Also, in a right area of the opposing face 24b, referred to in Fig. 2, through holes 36b are formed to allow the connection protrusions 35a of the first laminate bus bar 2a to pass through and make the connection protrusions 35a electrically connect with the terminals of the switching modules 4.

Here, because the first laminate bus bar 2a and the second laminate bus bar 2b have a potential difference when power is converted, they have to be insulated depending on the potential difference. To insulate them, one way is providing a spatial distance enough so that a proper insulation condition can be maintained between the first laminate bus bar 2a and the second laminate bus bar 2b and another way is interposing an insulating material between the first laminate bus bar 2a and the second laminate bus bar 2b.

In the power conversion apparatus 1 pertaining to the first embodiment, as depicted in Fig. 2 and Fig. 3, by disposing (interposing) an insulating material 5 (corresponding to a first insulating material in the present application) between the opposing face 24a of the first laminate bus bar 2a and the opposing face 24b of the second laminate bus bar 2b (that is, on the switching modules 4 side), insulation is provided for an area of the laminate bus bar assembly 2, the area facing the switching modules 4. Now, in this insulating material 5, as depicted in Fig. 3, through holes 54 are formed for penetration of the connection protrusions 35a of the first laminate bus bar 2a.

On the other hand, insulation is provided for an area of the laminate bus bar 2, the area facing the filter capacitors 3, by providing a spatial distance enough so that a proper insulation condition can be maintained between the opposing face 23a of the first laminate bus bar 2a and the opposing face 23b of the second laminate bus bar 2b.

As described in the foregoing, because the power conversion apparatus 1 pertaining to the first embodiment includes the laminate bus bar assembly 2 in which the first laminate bus bar 2a having the bent portion 21a and the second laminate bus bar 2b having the bent portion 21b are layered (that is, the laminate bus bar assembly 2 having a bent shape), options of wiring routing increase and an improvement can be made in terms of downsizing and the degree of freedom of design. Furthermore, in this power conversion apparatus 1, because the insulating material 5 is positioned between the opposing face 24a of the first laminate bus bar 2a in which the bent portion 21a has been formed beforehand and the opposing face 24b of the second laminate bus bar 2b in which the bent portion 21b has been formed beforehand, the insulating material 4 is not bent in the bent portions (bent portions 21a and 21b) of the laminate bust bar assembly 2. Therefore, a decrease in the pressure tightness of the insulating material 5 because of bending does not occur and stable performance can be maintained constantly.

In addition, positioning the insulating material 5 between the opposing face 24a of the first laminate bus bar 2a and the opposing face 24b of the second laminate bus bar 2b also enables it to increase the strength of the area of the laminate bus bar assembly 2, the area facing the switching modules. That is, although the opposing faces 24a and 24b whose one ends are supported by the bent portion 2a and 21b respectively are placed in a cantilever state in the first embodiment, the area of the laminate bus bar assembly 2, the area facing the switching modules 4, can be maintained in a more stable condition by positioning the insulating material 5 between the opposing face 24a and the opposing face 24b.

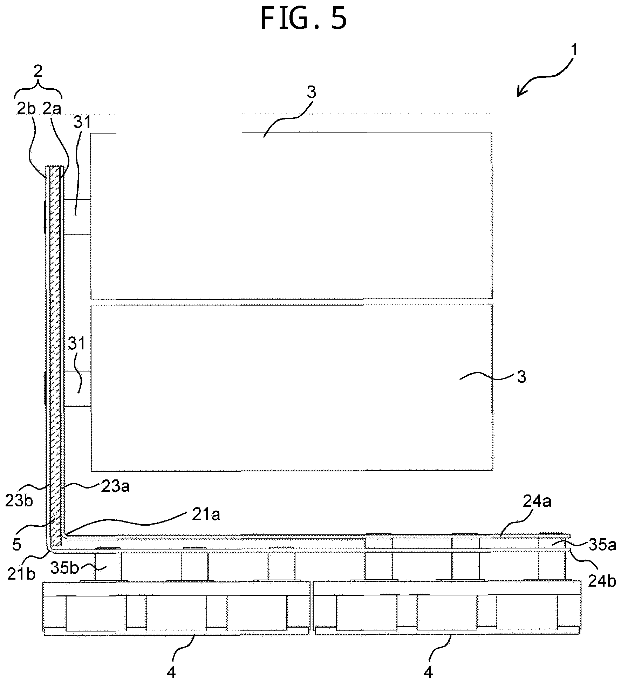

Now, while a case where the insulating material 5 is positioned between the opposing face 24a of the first laminate bus bar 2a and the opposing face 24b of the second laminate bus bar 2b has been described in the first embodiment, positioning of the insulating material 5 is not so limited and the insulating material 5 may be positioned between the opposing face 23a of the first laminate bus bar 2a and the opposing face 23b of the second laminate bus bar 2b (that is, so as to be adjacent to the terminals 31 of the filter capacitors 3), for example, as depicted in Fig. 5. In this case, insulation for an area of the laminate bus bar assembly 2, the area facing the filter capacitors 3, is provided by providing a spatial distance enough so that a proper insulation condition can be maintained between the opposing face 24a of the first laminate bus bar 2a and the opposing face 24b of the second laminate bus bar 2b, as depicted in Fig. 5.

Also, in the case of a power conversion apparatus 1 having a configuration which is depicted in Fig. 5, an improvement is made in terms of downsizing and the degree of freedom of design and, in addition, a decrease in the pressure tightness of the insulating material 5 because of bending does not occur and stable performance can be maintained constantly, as is the case for the power conversion apparatus 1 which is depicted in Figs. 1 to 4.

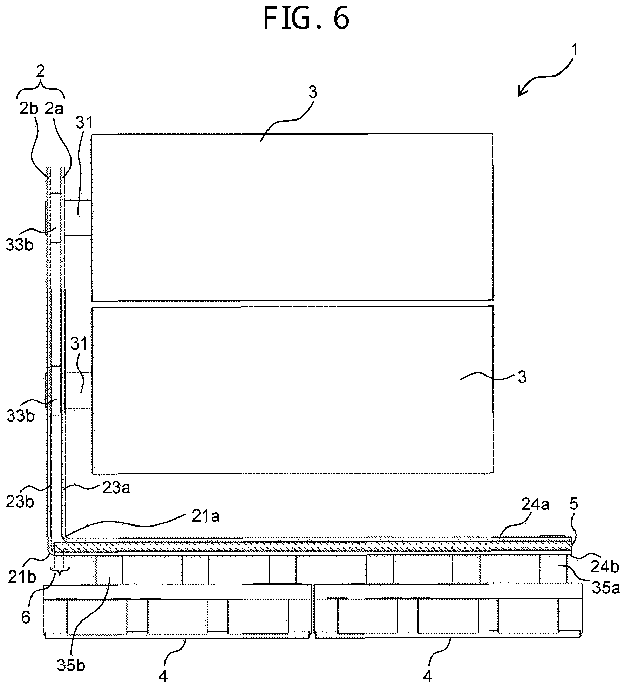

In addition, as depicted in Fig. 6, in such a way as to interpose an end of the insulating material adjacent to the bent portions 21a and 21b between the bent portion 21a and the bent portion 21b, an extension portion 6 is provided so that the end of the insulation material is extended farther than for the insulating material 5 depicted in Fig. 2 providing an extension portion 6; thereby, it is possible to ensure a spatial distance and a creeping distance more surely. Therefore, the configuration depicted in Fig. 6 is adaptable even for a case where, for example, the spatial distance and the creeping distance are insufficient.

Moreover, insulating material 5 is positioned between the opposing face 24a of the first laminate bus bar 2a and the opposing face 24b of the second laminate bus bar 2b as well as between the opposing face 23a of the first laminate bus bar 2a and the opposing face 23b of the second laminate bus bar 2b. Also, in the case of this configuration, the insulation materials 5 are not bent in the bent portions 21a and 21b. Therefore, a decrease in the pressure tightness of the insulating materials 5 because of bending does not occur and stable performance can be maintained constantly.

Furthermore, while a case where the opposing face 23a and the opposing face 24a are positioned at a substantially right angle to each other with respect to a folding line which is the bent portion 21a and the opposing face 23b and the opposing face 24b are positioned at a substantially right angle to each other with respect to a folding line which is the bent portion 21b has been described in the first embodiment, the opposing face 23a and the opposing face 24a as well as the opposing face 23b and the opposing face 24b may be positioned at any other angle, if desired.

### Second Embodiment

Then, a power conversion apparatus pertaining to a second embodiment is described with reference to the drawings. Now, in the second embodiment, members corresponding to the members described in the first embodiment are assigned identical reference designators and their detailed description is omitted.

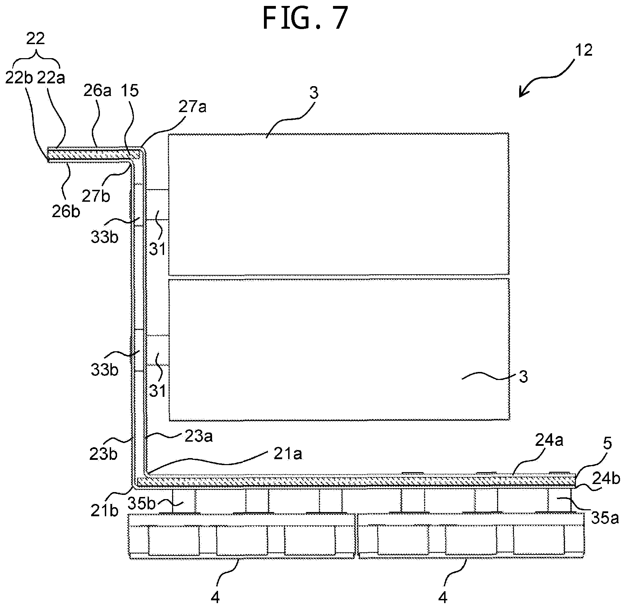

Fig. 7 is a side view diagram of the power conversion apparatus pertaining to the second embodiment. As depicted in Fig. 7, a main difference of the power conversion apparatus 12 pertaining to the second embodiment from the power conversion apparatus 1 pertaining to the first embodiment is the shape of a laminate bus bar assembly 22.

As depicted in Fig. 7, the laminate bus bar assembly 22 in the power conversion apparatus 12 pertaining to the second embodiment includes a first laminate bus bar 22a having a substantially letter Z (a substantially crank shape) and a second laminate bus bar 22b having a substantially letter Z shape, which is the same as the first laminate bus bar 22a, and layered with respect to the first laminate bus bar 22a with both the bus bars being spaced from each other.

As depicted in Fig. 7, the first laminate bus bar 22a has an opposing face 23a which is positioned opposite to the terminals 31 of the filter capacitors 3, an opposing face 24a which is connected to one end of the opposing face 23a at a bent portion 21a and positioned opposite to the switching modules 4, and an extension face 26a (corresponding to a third face in the present application) which is connected to the other end of the opposing face 23a at a bent portion 27a (corresponding to a second bent portion in the present application) and extends in a direction in which the terminals 31 protrude. The opposing face 23a and the extension face 26a are positioned at a substantially right angle to each other with respect to a folding line which is a bent portion 27a and the extension face 26a extends in a direction opposite to the opposing face 24a. The opposing face 23a and the opposing face 24a are positioned at a substantially right angle to each other with respect to a folding line which is the bent portion 21a, as is the case for the first embodiment. This configuration makes the first laminate bus bar 22a assume the substantially letter Z shape mentioned above.

As depicted in Fig. 7, the second laminate bus bar 22b has an opposing face 23b which is positioned opposite to the terminals 31 of the filter capacitors 3, an opposing face 24b which is connected to one end of the opposing face 23b at a bent portion 21b and positioned opposite to the switching modules 4, and an extension face 26b (corresponding to a third face in the present application) which is connected to the other end of the opposing face 23b at a bent portion 27b (corresponding to a second bent portion in the present application) and extends in a direction in which the terminals 31 protrude. The opposing face 23b and the extension face 26b are positioned at a substantially right angle to each other with respect to a folding line which is a bent portion 27b and the extension face 26b extends in a direction opposite to the opposing face 24b. The opposing face 23b and the opposing face 24b are positioned at a substantially right angle to each other with respect to a folding line which is the bent portion 21b, as is the case for the first embodiment. This configuration makes the second laminate bus bar 22b assume the substantially letter Z shape mentioned above.

An insulating material 15 (corresponding to a second insulating material in the present application) is disposed between the extension face 26a of the first laminate bus bar 22a and the extension face 26b o the second laminate bus bur 22b.

Now, insulation between the opposing face 24a of the first laminate bus bar 22a and the opposing face 24b of the second laminate bus bar 22b and insulation between the opposing face 23a of the first laminate bus bar 22a and the opposing face 23b of the second laminate bus bar 22b are provided in the same way as for the first embodiment.

As described in the foregoing, because the power conversion apparatus 12 pertaining to the second embodiment includes the laminate bus bar assembly 22 in which the first laminate bus bar 22a having two bent portions 21a and 27a and the second laminate bus bar 22b having two bent portions 21b and 27b are layered, options of wiring routing increase further and a further improvement can be made in terms of downsizing and the degree of freedom of design. Furthermore, in this power conversion apparatus 22, the insulating materials 5 and 15 are not bent, as is the case for the first embodiment. Therefore, a decrease in the pressure tightness of the insulating materials 5 and 15 because of bending does not occur and stable performance can be maintained constantly.

In addition, in the power conversion apparatus 12, because the insulating material 5 is disposed between the opposing face 24a and the opposing face 24b, the insulating material 15 is disposed between the extension face 26a and the extension face 26b, and the extension faces 26a and 26b are parallel with each other, the insulating materials 5 and 15 can be disposed at one time by crimping in one direction and this can prevent a manufacturing process from becoming complex. Furthermore, by positioning the insulating material 15 between the extension face 26a and the extension face 26b, it is possible to increase the strength of this area.

Now, while the laminate bus bar assembly 22 bent at two points has been described in the second embodiment, bending is not so limited and the number of bent portions and the direction of bending are non-limiting; the laminate bus bar assembly 22 can be designed into any optional shape. For example, although the power conversion apparatus 12 is depicted in Fig. 7 within a scope that it provides for electrical connection of the filter capacitors 3 and the switching modules 4, the power conversion apparatus 12 is additionally connected with a power supply source and a power output destination such as an induction motor. Therefore, by optionally designing the shape of the laminate bus bar assembly 22 adaptively for power output destinations which are electrically connected with the apparatus, it is possible to further increase options of wiring routing to other electrical equipment or the like.

### Third Embodiment

Then, a power conversion apparatus pertaining to a third embodiment is described with reference to the drawings. Now, in the third embodiment, members corresponding to the members described in the first embodiment are assigned identical reference designators and their detailed description is omitted.

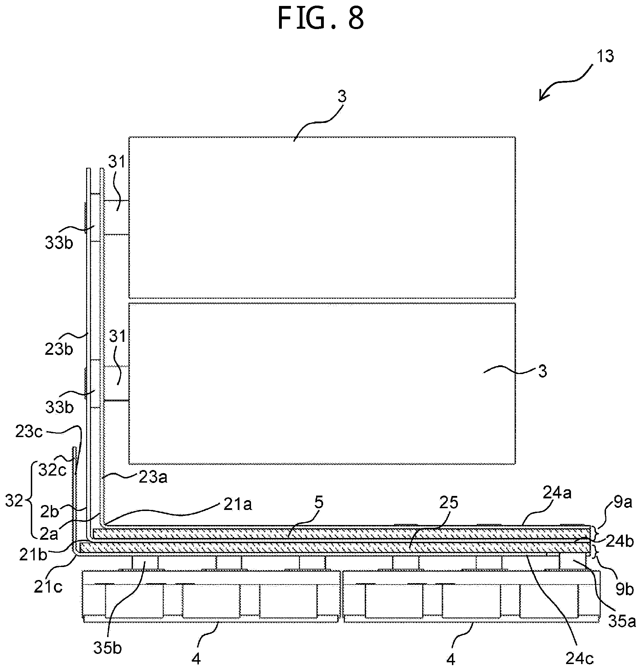

Fig. 8 is a side view diagram of the power conversion apparatus pertaining to the third embodiment. As depicted in Fig. 8, a main difference of the power conversion apparatus 13 pertaining to the third embodiment from the power conversion apparatus 1 pertaining to the first embodiment is the shape of a laminate bus bar assembly 32.

As depicted in Fig. 8, The laminate bus bar assembly 32 in the power conversion apparatus 13 pertaining to the third embodiment includes a first laminate bus bar 2a, a second laminate bus bar 2b layered with respect to the first laminate bus bar 2a with both the bus bars being spaced from each other, and a third laminate bus bar 32c layered with respect to the second laminate bus bar 2b with both the bus bars being spaced from each other in a side opposite to the first laminate bus bar 2a and having a substantially letter L shape in a side view.

As depicted in Fig. 8, the third laminate bus bar 32c has an opposing face 23c (corresponding to a fifth face in the present application) which is positioned opposite to the opposing face 23b of the second laminate bus bar 2b and an opposing face 24c (corresponding to a fourth face in the present application) which is connected to one end of the opposing face 23c at a bent portion 21c (corresponding to a third bent portion in the present application) and positioned opposite to the switching modules 4. The opposing face 23c and the opposing face 24c are positioned at a substantially right angle to each other with respect to a folding line which is the bent portion 21c and the opposing face 23c is configured such that its length in a vertical direction in Fig. 8 is shorter than the opposing faces 23a and 23b. Also, in the opposing face 24c, through holes, which are not depicted, are formed to allow the connection protrusions 35a of the opposing face 24a to pass through and through holes, which are not depicted, are formed to allow the connection protrusions 35b of the opposing face 24b to pass through which the third laminate bus bar 32c is layered together with the first laminate bus bar 2a and the second laminate bus bar 2b.

The insulating material 5 is disposed between the opposing face 24a of the first laminate bus bar 2a and the opposing face 24b of the first laminate bus bar 2b, as is the case for the first embodiment.

An insulating material 25 (corresponding to a third insulating material in the present application) is disposed between the opposing face 24b of the second laminate bus bar 2b and the opposing face 24c of the third laminate bus bar 32c. In this insulating material 25, through holes, which are not depicted, are formed to allow the connection protrusions 35a of the opposing face 24a to pass through and through holes, which are not depicted, are formed to allow the connection protrusions 35b of the opposing face 24b to pass through. The connection protrusions 35a and 35b pass through the through holes, which are not depicted, formed in the insulating material and the through holes, which are not depicted, formed in the opposing face 24c to make electrical connections with the terminals of the switching modules 4.

Now, insulation between the opposing face 24a of the first laminate bus bar 2a and the opposing face 24b of the second laminate bus bar 2b as well as insulation between the opposing face 23a of the first laminate bus bar 2a and the opposing face 23b of the second laminate bus bar 2b are provided in the same way as for the first embodiment.

As described in the foregoing, as depicted in Fig. 8, the power conversion apparatus 13 pertaining to the third embodiment has a configuration in which, in the side where connection is made with the terminals of the switching modules 4, the opposing face 24a of the first laminate bus bar 2a and the opposing face 24b of the second laminate bus bar 2b are layered with the insulating material 5 in between (a first layer 9a) and the opposing face 24b of the second laminate bus bar 2b which is a constituent part of the first layer 9a and the opposing face 24c of the third laminate bus bar 32c are layered with the insulating material 25 in between (a second layer 9b). The more the layers into which laminate bus bars are layered, layering can be more effective for reducing wiring inductance, downsizing the apparatus, making it thinner, and reducing assembly man-hours. On the other hand, layering increases the weight of the bus bar assembly as a single component and, therefore, in a design phase, a synthetic judgment should be made as to reducing wiring inductance, downsizing the apparatus, making it thinner, and reducing assembly man-hours, as well as weight saving, and an optical condition should be selected.

In addition, because the power conversion apparatus 13 has the configuration in which the insulating material 5 and the insulation material 25 are layered, the insulating materials 5 and 25 can be disposed at one time by crimping in one direction and this can prevent a manufacturing process from becoming complex.

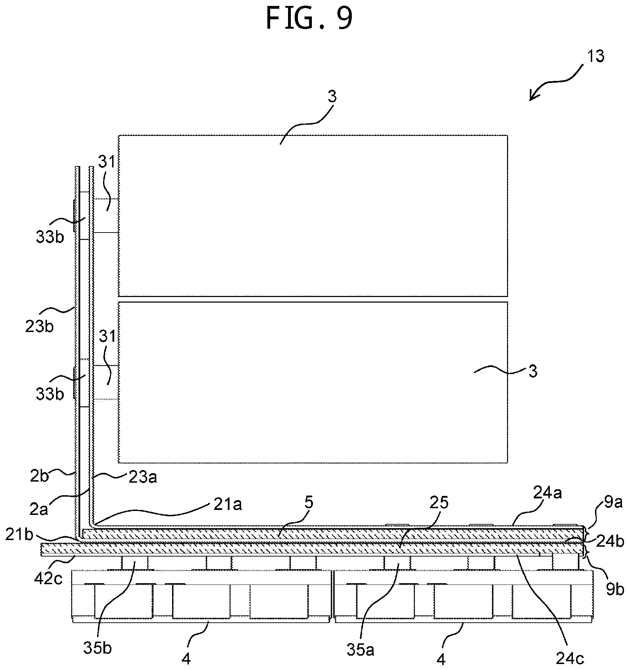

Now, while the laminate bus bar assembly 32 bent at one point has been described in the third embodiment, bending is not so limited and the number of bent portions and the direction of bending are non-limiting; the laminate bus bar assembly 32 can be designed into any optional shape. Alternatively, as depicted in Fig. 9, a third laminate bus bar 42a having a planar shape without a bent portion may be disposed instead of the third laminate bus bar 32c.

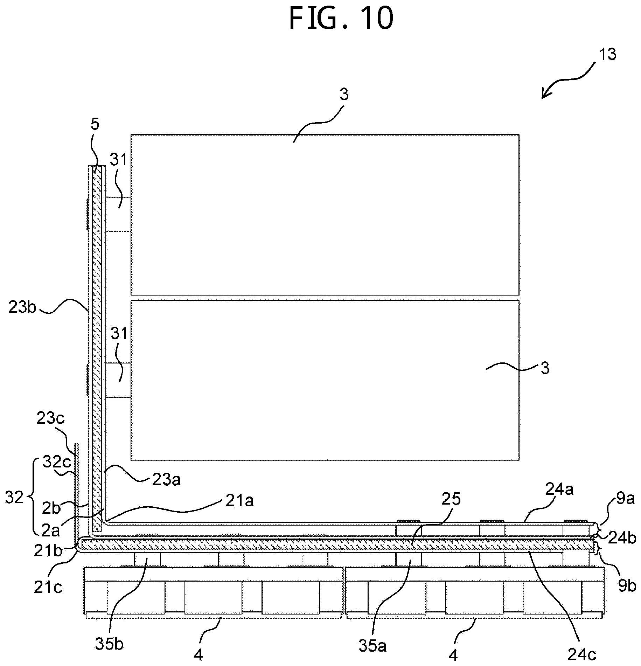

Furthermore, as depicted in Fig. 10, instead of disposing the insulating material 5 between the opposing face 24a of the first laminate bus bar 2a and the opposing face 24b of the second laminate bus bar 2b, the insulating material 5 may be disposed between the opposing face 23a of the first laminate bus bar 2a and the opposing face 23b of the second laminate bus bar 2b. In the case of this configuration, it is possible to increase the mechanical strength of the area facing the filter capacitors. In this way, by disposing an insulating material in an area where it is desired to increase the mechanical strength of laminate bus bars having a layered structure, it is possible to reinforce a section where mechanical strength is low.

### List of Reference Signs

1, 12, 13... Power conversion apparatus, 2, 22, 32... Laminate bus bar, 2a, 22a... First laminate bus bar, 2b, 22b... Second laminate bus bar, 3... Filter capacitor, 4... Switching module, 5, 15, 25... Insulating material, 6... Extension portion, 9a... First layer, 9b... Second layer, 21a, 21b, 21c, 27a, 27b... Bent portion, 23a, 23b, 23c, 24a, 24b, 24c... Opposing face, 26a, 26b... Extension face, 31... Terminal, 32c, 42c... Third laminate bus bar, 33a... Connection portion, 33b, 35a, 35b... Connection protrusion, 34a... Insertion hole, 36b, 54... Through hole

## Claims

1. A power conversion apparatus comprising filter capacitors (3) for storing direct current DC power, switching modules (4) for converting DC power stored in the filter capacitors (3) to alternating current AC power, and a layered laminate bus bar assembly (2) in which a plurality of laminate bus bars (2a, 2b) are layered with a given spacing from one another, the filter capacitors (3) and the switching modules (4) being electrically connected by the layered laminate bus bar assembly (2),
wherein the layered laminate bus bar assembly (2) includes a first laminate bus bar (2a) and a second laminate bus bar (2b), laminated with an insulation film,
the first laminate bus bar (2a) and the second laminate bus bar (2b) respectively include first faces (23a, 23b) opposing each other, second faces (24a, 24b) opposing each other, and bent portions (21a, 21b) connecting the first faces (23a, 23b) with the second faces (24a, 24b) respectively and opposing each other,
the insulation film comprises an insulating material (5) that is disposed, respectively, between the first face (23a) of the first laminate bus bar (2a) and the first face (23b) of the second laminate bus bar (2b) and between the second face (24a) of the first laminate bus bar (2a) and the second face (24b) of the second laminate bus bar (2b) so that the insulating material (5) is not bent in the bent portions (21a, 21b), and
wherein the first laminate bus bar (2a) comprises plural insertion holes (34a) into which connection protrusions (33b )of the second laminate bus bar (2b) are inserted.

2. The power conversion apparatus according to claim 1,
wherein the plural insertion holes (34a), and plural connection portions (33a) which electrically connect with terminals (31) of the filter capacitors (3) are formed alternately on the first face (23a) of the first laminate bus bar (2a);
plural connection protrusions (35a) which penetrate through through-holes (36b) in the second face (24b) of the second laminate bus bar (2b) and electrically connect with the switching modules (4) are formed on the second face (24a) of the first laminate bus bar (2a) ;
the connection protrusions (33b) of the second laminate bus bar (2b) electrically connect with the terminals (31) of the filter capacitors (3).

## Patentansprüche

1. Leistungswandlervorrichtung, die Folgendes umfasst: Filterkondensatoren (3) zum Speichern von Gleichstrom-DC-Leistung, Schaltmodule (4) zum Wandeln der in den Filterkondensatoren (3) gespeicherten DC-Leistung in Wechselstrom-AC-Leistung und eine geschichtete Laminatsammelschienenanordnung (2), in der eine Vielzahl von Laminatsammelschienen (2a, 2b) in einem vorgegebenen Abstand voneinander geschichtet sind, wobei die Filterkondensatoren (3) und die Schaltmodule (4) durch die geschichtete Laminatsammelschienenanordnung (2) elektrisch verbunden sind,
wobei die geschichtete Laminatsammelschienenanordnung (2) eine erste Laminatsammelschiene (2a) und eine zweite Laminatsammelschiene (2b) umfasst, die mit einem Isolationsfilm laminiert sind,
die erste Laminatsammelschiene (2a) und die zweite Laminatsammelschiene (2b) jeweils erste Flächen (23a, 23b), die einander gegenüberliegen, zweite Flächen (24a, 24b), die einander gegenüberliegen, und gebogene Abschnitte (21a, 21b), die die ersten Flächen (23a, 23b) mit den zweiten Flächen (24a, 24b) jeweils miteinander verbinden und einander gegenüberliegen,
der Isolationsfilm ein Isolationsmaterial (5) umfasst, das jeweils zwischen der ersten Fläche (23a) der ersten Laminatsammelschiene (2a) und der ersten Fläche (23b) der zweiten Laminatsammelschiene (2b) sowie zwischen der zweiten Fläche (24a) der ersten Laminatsammelschiene (2a) und der zweiten Fläche (24b) der zweiten Laminatsammelschiene (2b) so angeordnet ist, dass das Isolationsmaterial (5) in den gebogenen Abschnitten (21a, 21b) nicht gebogen ist, und
wobei die erste Laminatsammelschiene (2a) mehrere Einführlöcher (34a) umfasst, in die Verbindungsvorsprünge (33b) der zweiten Laminatsammelschiene (2b) eingeführt sind.

2. Leistungswandlervorrichtung nach Anspruch 1,
wobei die mehreren Einführlöcher (34a) und mehrere Verbindungsabschnitte (33a), die mit Anschlüssen (31) der Filterkondensatoren (3) elektrisch verbunden sind, abwechselnd auf der ersten Fläche (23a) der ersten Laminatsammelschiene (2a) ausgebildet sind;
mehrere Verbindungsvorsprünge (35a), die durch Durchgangslöcher (36b) in der zweiten Fläche (24b) der zweiten Laminatsammelschiene (2b) hindurchtreten und mit den Schaltmodulen (4) elektrisch verbunden sind, auf der zweiten Fläche (24a) der ersten Laminatsammelscheine (2a) ausgebildet sind;
die Verbindungsvorsprünge (33b) der zweiten Laminatsammelschiene (2b) mit den Anschlüssen (31) der Filterkondensatoren (3) elektrisch verbunden sind.

## Revendications

1. Appareil de conversion de puissance comprenant des condensateurs de filtrage (3) pour stocker une puissance en courant continu DC, des modules de commutation (4) pour convertir la puissance DC stockée dans les condensateurs de filtrage (3) en puissance en courant alternatif AC, et un ensemble de barres omnibus stratifiées superposées (2) dans lequel une pluralité de barres omnibus stratifiées (2a, 2b) sont superposées avec un espacement donné les unes des autres, les condensateurs de filtrage (3) et les modules de commutation (4) étant connectés électriquement par l'ensemble de barres omnibus stratifiées superposées (2),
dans lequel l'ensemble de barres omnibus stratifiées superposées (2) comprend une première barre omnibus stratifiée (2a) et une seconde barre omnibus stratifiée (2b), stratifiées avec un film isolant,
la première barre omnibus stratifiée (2a) et la seconde barre omnibus stratifiée (2b) comprennent respectivement des premières faces (23a, 23b) opposées l'une à l'autre, des secondes faces (24a, 24b) opposées l'une à l'autre, et des parties courbées (21a, 21b) reliant les premières faces (23a, 23b) aux secondes faces (24a, 24b) respectivement et opposées l'une à l'autre,
le film isolant comprend un matériau isolant (5) qui est disposé, respectivement, entre la première face (23a) de la première barre omnibus stratifiée (2a) et la première face (23b) de la seconde barre omnibus stratifiée (2b) et entre la seconde face (24a) de la première barre omnibus stratifiée (2a) et la seconde face (24b) de la seconde barre omnibus stratifiée (2b) de sorte que le matériau isolant (5) n'est pas courbé dans les parties courbées (21a, 21b), et
dans lequel la première barre omnibus stratifiée (2a) comprend plusieurs trous d'insertion (34a) dans lesquels des saillies de connexion (33b) de la seconde barre omnibus stratifiée (2b) sont insérées.

2. Appareil de conversion de puissance selon la revendication 1,
dans lequel les plusieurs trous d'insertion (34a), et plusieurs parties de connexion (33a) qui se connectent électriquement à des bornes (31) des condensateurs de filtrage (3) sont formés en alternance sur la première face (23a) de la première barre omnibus stratifiée (2a) ;
plusieurs saillies de connexion (35a) qui pénètrent à travers des trous traversants (36b) dans la seconde face (24b) de la seconde barre omnibus stratifiée (2b) et se connectent électriquement aux modules de commutation (4) sont formées sur la seconde face (24a) de la première barre omnibus stratifiée (2a) ;
les saillies de connexion (33b) de la seconde barre omnibus stratifiée (2b) se connectent électriquement aux bornes (31) des condensateurs de filtrage (3).
